# EUROPEAN PATENT APPLICATION

(11) **EP 2 527 785 A1**
(43) Date of publication of application: **28.11.2012**
(21) Application number: 11004191.0
(22) Date of filing: 20.05.2011
(51) Int. Cl.: G01B 11/30, E01C 23/00, G01B 5/20, G01B 5/207, G01B 5/28

(54) **Method and device for flatness measurement**

(71) Applicant: Tata Steel UK Limited, London SW1P 4WY (GB)
(72) Inventor: Milling, Oliver, 1970 CA Ijmuiden (NL)
(74) Representative: Blauw, Frans Gerard

(57) **Abstract**

The invention relates to a device and method for flatness measurement of a surface wherein the device comprises a frame, at least one distance sensor connected to the frame, a control unit for the at least one distance sensor and a data processing unit for processing data from the at least one distance sensor. The deviation of flatness is determined by taking a number of measurements over a certain length and determining maximum variation from a straight line.

## Description

The invention relates to flatness measurement of a surface, more in particular flatness measurement of metal plate or strip or steel plate or strip.

This kind of measurement is normally done by the so-called 'rule and wedge' method which involves placing a straight edge of a certain length on a surface and then inserting a 'wedge' or 'feeler gauge' under the straight edge at several places along its length. The gauge provides a measure of the gap between the straight edge and the surface and hence how flat the surface is. The maximum distance between the gauge and the straight edge is the quoted plate flatness. This will normally be quoted in millimetres per length of the straight edge used.

The flatness measurement of a plate or strip will in most cases be done at a production plant in an environment that may be dusty, damp, noisy, hot and dirty. Moreover, the operator carrying out the measurement will have to bend down to floor level, measure a section of a plate and moving the position of the wedge or like device on the plate to a next measurement position on the plate.

It is an objective of the invention to provide a device for flatness measurement of a surface which allows measurement of flatness in an easy and reliable manner.

It is another objective of the invention to provide a device for flatness measurement of a surface which gives a clear indication of deviation of flatness or when deviation limits are exceeded.

It is another objective of the invention to provide a device for flatness measurement of a surface which can be moved easily over a surface of which the flatness is to be measured.

It is still a further objective of the invention to provide a device for flatness measurement of a surface which allows multiple measurements to be carried out in succession.

It is a further objective of the invention to provide a device for flatness measurement of a surface which can be manufactured at low costs.

It is a further objective of the invention to provide a device for flatness measurement of a surface that is portable and can be used in any location.

It is still another object of the invention to provide a method to determine in a reliable manner the flatness of the surface of a plate, strip or other surface by taking a number of measuring points on the surface.

It is still another object of the invention to provide a method to determine in a reliable manner the flatness of a surface by taking a number of measuring points along one or more lines on the surface.

One or more of these objectives are realised by providing a device for flatness measurement of a surface comprising a frame, at least one distance sensor connected to the frame, a control unit for the at least one distance sensor and a data processing unit for processing data from the at least one distance sensor.

According to a first embodiment it is provided that the at least one distance sensor is movable along the frame. With such a movable distance sensor a number of measurements can be done over a certain length. In the metals processing industry flatness measurements are normally done by measuring differences with respect to a straight line over a distance of 1 meter or 2 meter depending on the specific requirements for the product or of the client. With a movable distance sensor according to the invention a number of measurements can be carried out over a length as is usual in the industry or any other length.

By measuring along a line of a certain length the straightness of the surface along that line or the deviation from straightness along that line is measured. If there is a deviation from straightness along a line over a product, in most cases it follows that a certain surface area containing the line of measurement is not flat. By taking measurements along lines on different sides of an elongated product the overall straightness of that product can be determined. Elongated products are for example structural sections used in the building industry, rail sections and many other like products which have the common feature that these should all be straight.

With measurements along parallel lines and/or lines at an angle to each other on a single side of a flat product or what should be a flat product the flatness of a certain surface area containing these lines or the deviation from flatness can be determined. In most cases deviation from flatness for flat products, such as strip or plate, should be within certain limits, which is determined by taking measurements along a certain set of lines wherein deviation of straightness along the line should be within certain limits.

In the present description the term "flatness" is used which could have the meaning of both "straightness" and "flatness".

According to a second embodiment a number of distance sensors are connected to the frame in spaced relation. With this embodiment more distance sensors are needed than with the device with a single distance sensor movable along the frame. However, with a single movable distance sensor a carriage with drive means is needed to move the distance sensor along the frame and means to register the location of each subsequent measurement. In that respect an embodiment with a number of separate distance sensors is easier to manufacture and will in most cases also be cheaper to manufacture.

According to a further aspect of the invention one or more spacers are provided to keep the frame at a distance from the surface of which the flatness is to be measured. With two or more spacers at a distance from each other it can be prevented that the distance sensors could come into direct contact with the surface that is to be measured and be damaged. Moreover, such spacers could be used as distance values in determining flatness of the surface.

According to still a further aspect it is provided that at least one spacer is a wheel. This is particularly convenient when the surface that is to measured is positioned horizontally or at a moderate angle from horizontal. With one or more wheels the device can be wheeled over the surface to every next location where a flatness measurement has to be carried out.

The distance sensors can be arranged in a single line or in an array so that the flatness of a surface can either be measured with respect to a straight line or a flat plane. In a configuration where the flatness is to be measured with respect to a flat plane the device would preferably be provided with three spacers or three wheels or a combination of wheels and spacers. In order to measure the flatness of a certain surface area a great number of distance sensors would be needed as well as additional data processing capacity. The deviations from a flat plane as encountered with plate and strip are of such wavelength that in virtually all cases it will be sufficient to take a number of measurements with respect to one or more straight lines in one or two directions to have sufficient data. For that reason a device with a number of distance sensors in line or one or more distance sensors movable in line will be more than satisfactory for the purpose.

The device is preferably made such that it can be operated manually in an easy manner. To that end the frame is provided with at least one wheel and a handle long enough that a person walking upright can wheel the device easily over the surface to be measured. With this embodiment it is prevented that the operator has to bend down continually, with the risk of back troubles, as with the normally used 'rule and wedge' method.

Preferably display means are provided to directly present measurement results. These measurement results could be combined with warning means, which may include clearly visible display means or signal means giving a signal when a certain threshold value is exceeded or that indicate changes along the line of measurement.

The invention further provides a method for flatness measurement of a surface comprising the steps of:
- measuring the distance between the surface and at least three distance sensor points spaced from each other,
- determining a straight line on basis of the measured surface points,
- determining for each surface point the distance between that surface point and the straight line,
- determining of the measured surface points the highest absolute value below the straight line and the highest absolute value above the straight line, and
- comparing the sum of said highest and lowest absolute value with a reference fault value.

The term distance sensor point means the point on the frame from which a distance is measured or which represents a known distance as with a spacer.

The distance from a surface point to the straight line is done by subtracting for each measured surface point the calculated distance between the distance sensor point and the straight line from the measured distance from the distance sensor point to the surface point.

Since it is not easy to align all spacers or distance sensors or a combination of spacers and distance sensors on the frame the invention provides that the distance sensor points are calibrated with respect to a flat surface before measuring the flatness of a surface. Of course it is not necessary to calibrate the distance sensors before every measurement. Before using a set of measurements to determine flatness or rather the deviation from flatness the measured values are first normalised with the calibrated values. The normalised values are used to calculate a line of best fit. The line of best fit may be calculated by using a linear least squares method or any other suitable calculating method.

In the method at least one distance sensor point comprises a distance sensor. Ultra-sonic, infra-red and laser distance sensors can be used for this purpose. With these kind of distance sensors an accuracy can be obtained which will be more than sufficient for flatness measurements of a metal or steel plate or strip. For instance, in the steel industry the out of flatness may typically be at most be 5 mm per metre and with a resolution of these distance sensors in the order of less than 0.1 mm the accuracy will be better than with manual measurements using the 'rule and wedge' method.

If a distance sensor movable with respect of the frame is used the distance measurement as well as the position of the distance sensor at the time of the measurement should be registered and used in the method.

If a spacer element is used a fixed distance between distance sensor point and a point to be measured on a surface can be used in calculating the line of best fit. If the spacer element is a wheel and is used in the method as a distance sensor point the roundness of the wheel have to be within a certain limit in order to be able to keep the desired accuracy of the method.

According to a further aspect of the method the device is moved over a surface and measurements are repeated after a certain time interval or certain displacement of the device. Preferably the measurements are done after a certain time interval since that can easily be generated with the control means for the distance sensors. Also preferably the measurement is carried out by means of the distance sensors only, that is without using a distance represented by any rigid spacer elements or the wheels.

By having the control means taking measurements and carry out calculations at a time interval in a range of 1 second to 0.001 second or more preferably in a range from 0.2 second to 0.01 second, an operator can wheel the device over the surface and carry out measurements over subsequent lengths. With short time intervals the lengths over which the measurement are carried out will overlap. This can only be done with fixed distance sensors, since with a distance sensor that moves along the frame, the frame has to be kept precisely in position during the measurement.

For every next measurement of the flatness or rather the deviation from flatness a new line of best fit is calculated and the deviations of the measured distances from that line. While wheeling the device over the surface the operator will be informed of the deviation, which can be done visually or acoustically, and if desired marks can be made on the surface.

Deviation from flatness can also be described as the length increase of the deformed surface compared to its reference flat length. The common unit for this ratio is the I unit or 10⁵ times the ratio of length increase/reference length.

Flatness or straightness can also be described as the radius of curvature of the surface of an object.

Either of these measurements can be calculated using the deviation from a calculated straight line calculated by the device.

The invention is further elucidated on hand of the non-limitative examples shown in the drawing, wherein:
fig. 1 shows schematically a side view of a flatness measurement device with a single distance sensor,
fig. 2 shows schematically a side view of a flatness measurement device with a single distance sensor that is movable along the frame,
fig. 3 shows schematically a side view of a flatness measurement device with multiple distance sensors, and
fig. 4 shows schematically a side view of a flatness measurement device on wheels with multiple distance sensors.

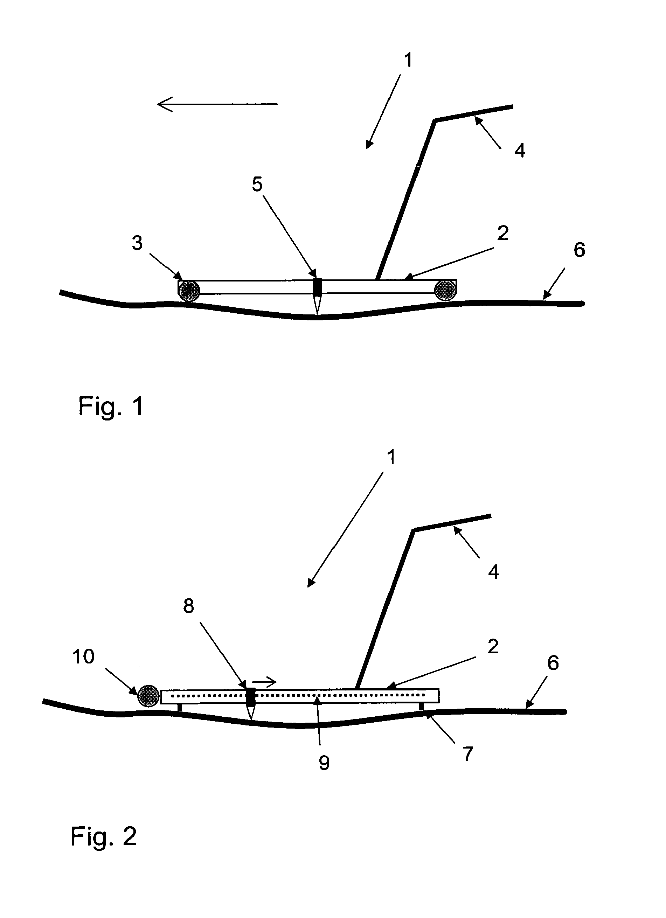

In fig. 1 flatness measurement device 1 is shown with a frame 2 provided with wheels 3 and a handle 4. An operator can push the device 1 by means of handle 4 over the surface 6 of which the flatness or deviation from flatness is to be measured. Surface 6 can be the surface of for instance a plate, strip, beam or any other surface of which the flatness or straightness is to be measured. Attached to the frame 2 and between wheels 3 a single distance sensor 5 is provided. With this embodiment the two wheels provide each a fixed distance which in combination with the distance measured with distance sensor 5 can be used to determine flatness. A setback of this embodiment is that the device will not be able to measure small shape defects. Further, with measurements in a direction transverse to the length of the plate no measurements can be done close to the edge of the plate.

The flatness measurement device 1 according to fig. 2 is supported by two spacers 7 provided at the side of the device facing the surface of plate 6. A distance sensor 8 is provided that is movable along a track 9 provided in frame 2. A transport wheel 10 is provided at an outer end of the frame. Since the flatness measurement has to be carried out with the device 1 stationary at the location of the measurement the device 1 is supported by spacers 7 rather than wheels as with the previous embodiment. Since a great number of distance measurements can be done with the movable distance sensor 8 the distances represented by the spacers 7 do not have to be used in the flatness measurement.

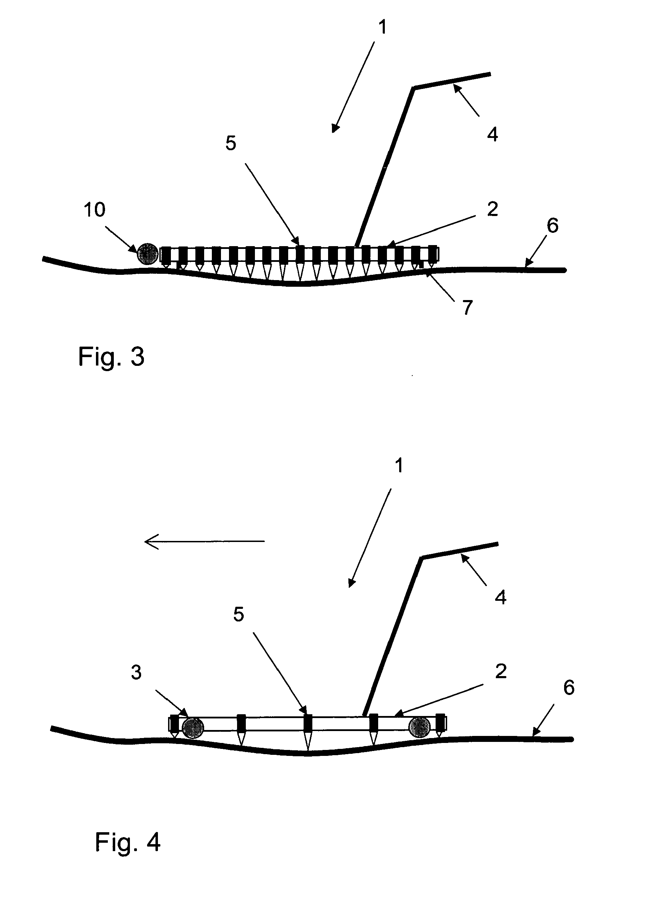

The embodiment according to fig. 3 is a variant of the embodiment according to fig. 2 wherein the single movable distance sensor is replaced by a number of fixed distance sensors 5. This embodiment has the advantage that there are no moving parts and will provide a device which will be able to withstand the harsh environment of a production plant.

The flatness measurement device 1 according to fig. 4 has also a number of distance sensors 5 fixed to frame 2, but far less than the embodiment according to fig.3. The device is provided with wheels 3 and can be wheeled over the surface of plate 6. With distance sensors 5 provided at the outer ends of frame 2 measurements in a direction transverse to the length of the plate can be carried out up till the edge of plate 6. With this embodiment the measurements are done for instance from 25 - 100 times a second, wherein each time the deviation of the measured points, in this example 5 measured points over a length of a meter, from a straight line of best fit is determined.

With 5 measuring points on a length of a meter most if not all of the shape defects possibly occurring in a plate can be determined.

With such a frequency of determining the flatness of the plate the measurement process can be done in a semi-continuous manner while wheeling the device over the surface of plate 6. The results are provided directly to the operator by means of a user interface on the handle 4. The user interface may also comprise the control means for the distance sensors and a data processing unit to process the data generated by the distance sensors. Alternatively the control means and the data processing unit may be attached to frame 2.

Preferably, the user interface, the control means and the data processing unit are fed from a battery, such as a rechargeable battery. This further improves the ease of handling of the device.

## Claims

1. Device for flatness measurement of a surface comprising a frame, at least one distance sensor connected to the frame, a control unit for the at least one distance sensor and a data processing unit for processing data from the at least one distance sensor.

2. Device according to claim 1, wherein the at least one distance sensor is movable along the frame.

3. Device according to claim 1, wherein a number of distance sensors are connected to the frame in spaced relation.

4. Device according to one or more of claims 1-3, wherein one or more spacers are provided to keep the frame at a distance from the surface of which the flatness is to be measured.

5. Device according to one or more of claims 1-3, wherein at least one spacer is a wheel.

6. Device according to claim 5, wherein the distance sensors are connected in line to the frame.

7. Device according to one or more of claims 1-6, wherein display means are provided to present measurement results.

8. Device according to one or more of claims 1-7, wherein the device is designed to be handled manually to which end the frame is provided with a handle.

9. Method for flatness measurement of a surface comprising the steps of:
- measuring the distance between the surface and at least three distance sensor points spaced from each other,
- determining a straight line on basis of the measured surface points,
- determining for each surface point the distance between that surface point and the straight line,
- determining of the measured surface points the highest absolute value below the straight line and the highest absolute value above the straight line, and
- comparing the sum of said highest and lowest absolute value with a reference fault value.

10. Method according to claim 9, wherein the distance sensor points are calibrated with respect to a flat surface before measuring the flatness of a surface.

11. Method according to claim 9 or 10, wherein at least one distance sensor point comprises a distance sensor.

12. Method according to claim 11, wherein at least one distance sensor is movable with respect of the frame.

13. Method according to one or more of claims 9-12, wherein at least one distance sensor point is determined by a spacer element mounted to the frame representing a fixed distance between distance sensor point and a point to be measured on a surface.

14. Method according to claim 13, wherein the spacer element is a wheel.

15. Method according to one or more of claims 9-14, wherein the device is moved over a surface and measurements are repeated after a certain time interval or certain displacement of the device.
